# EUROPÄISCHE PATENTANMELDUNG

(11) **EP 3 819 273 A1**
(43) Veröffentlichungstag der Anmeldung: **12.05.2021**
(21) Anmeldenummer: 19216862.3
(22) Anmeldetag: 17.12.2019
(51) Int. Cl.: C04B 28/02, C04B 40/00

(54) **PULVERFÖRMIGER, POLYMERMODIFIZIERTER ZUSATZSTOFF FÜR BETON UND VERFAHREN ZUR HERSTELLUNG EINES BETONS**

(30) Priorität: 07.11.2019 EP 19207611
(71) Anmelder: Martellus GmbH, 8125 Zollikerberg (CH)
(72) Erfinder: KLAUCK, Wolfgang Josef, 40670 Meerbusch (DE)
(74) Vertreter: Dosterschill, Peter

(57) **Zusammenfassung**

Die Erfindung betrifft einen pulverförmigen, polymermodifizierten Zusatzstoff für Beton, der als Komponenten
(a) 55 bis 99,5 Gew.-% eines Kern-Schale-Polyacrylats mit einer Glasübergangstemperatur Tgk des Kerns ≤ -10 °C, sowie einer Glasübergangstemperatur Tgs der Schale > 0 °C;
(b) 0,5 bis 5 Gew.-% einer pyrogenen oder kolloidalen Kieselsäure;
(c) 0 bis 8 Gew.-% eines modifizierten Polycarboxylatethers; und
(d) 0 bis 35 Gew.-% einer Kreide mit einem d50-Wert ≤ 8 µm
enthält, wobei sich Gew.-% jeweils auf die Summe der Komponenten bezieht. Die Erfindung betrifft außerdem ein Verfahren zur Herstellung eines Magerbetons, enthaltend einen Schritt der Mischung eines Zements mit einem solchen Zusatzstoff und mit einer Gesteinskörnung.

## Beschreibung

### Technisches Gebiet

Die Erfindung betrifft einen pulverförmigen, polymermodifizierten Zusatzstoff für Beton, der insbesondere für Schichten im Wege- und Straßenbau geeignet ist, und ein Verfahren zur Herstellung dieses Betons.

### Stand der Technik

Mit den hydraulischen Bindemitteln Zement oder Tragschichtbinder verfestigte bzw. stabilisierte Schichten haben im Verkehrswegebau große Bedeutung. Diese Schichten werden sowohl zur Herstellung des Unterbaus als auch zur Herstellung des Oberbaus von Fahrbahnkonstruktionen in hochrangigen Straßennetzen sowie im Wegebau eingesetzt. Die strukturelle Festigkeit und die Ermüdungsfestigkeit der mit hydraulischen Bindemitteln stabilisierten Schichten sind insbesondere für die Lebensdauer der Oberbaukonstruktionen der Verkehrsflächen von großer Bedeutung.

Zusatzstoffe (Additive) zur Untergrundbefestigung sind bekannt. Insbesondere ist der Einsatz von Polymerdispersionen zur Veredlung von zementösen Bindemitteln bekannt. Der Zusatz von bekannten Polymerdispersionen hat aber Nachteile, da sie hoch zu dosieren sind, um die Porosität und die Wasseraufnahme erheblich abzusenken und um die Haftzugfestigkeit auf einem glatten Untergrund zu steigern. Als Additive zur Untergrundbefestigung auf Basis von hydraulisch gebundenen Tragschichten (HGTs) werden bislang meistens Dispersionssysteme mit Aktivsubstanzgehalten unter 10 Gew.-% verwendet. Diese Dispersionssysteme sind oft dickflüssig, so dass die Auslaufzeiten- bzw. Wartezeiten von diese Dispersionssysteme enthaltenden Containern auf einer Baustelle lang sein können.

Überdies sind u.a. wegen des Transportes von viel Wasser die Ökobilanzen dieser Produkte deutlich verbesserungsbedürftig. Schließlich ist die Wasserfestigkeit dieser Dispersionssysteme aufgrund ihres Gehaltes an Chlorid-haltigen Salzadditiven sowie hydrophilen Polymeren limitiert.

Überdies sind polymermodifizierte bauchemische Produkte bekannt. So werden beispielsweise in Fliesenklebern Zemente eingesetzt, denen sogenannte Dispersions- bzw. Redispersionspulver zugesetzt werden. Bei den Dispersions- bzw. Redispersionspulvern handelt es sich um feinteilige Polymerpartikel, die bei der Zugabe von Wasser stabile Dispersionen bilden. Diese Dispersionspulver werden in der Regel durch Sprühtrocknung von Polymerdispersionen hergestellt und sorgen in den pulverförmigen Fliesenklebern und Ausgleichsmassen für eine bessere Verarbeitbarkeit, Haftung und Flexibilität auf kritischen Untergründen. Haftklebrige Dispersionen mit Glasübergangstemperaturen < -10°C lassen sich in der Regel nicht sprühtrocknen, da die Partikel insbesondere zusammenkleben würden.

Der überwiegende Teil der im Markt verfügbaren Redispersionspulver basiert auf Ethylenvinylacetat-Copolymeren, die mit Polyvinylalkoholen stabilisiert sind und Glasübergangstemperaturen > 0°C besitzen. Mischt man im Nachhinein Redispersionspulver wieder mit Wasser, entmischen sich diese Mischungen in der Regel schon nach wenigen Stunden. Aus diesem Grund kommen Redispersionspulver in der Regel nur für pulverförmige Zement- und Gips-basierte Rezepturen zum Einsatz.

Die Veröffentlichung WO 2010/105979 A1 beschreibt einen polymermodifizierten Zement. Insbesondere wird ein Verfahren zur Herstellung eines insbesondere trockenen, polymermodifizierten hydraulisch, latent-hydraulisch oder puzzolanisch abbindenden bauchemischen Produkts durch Vermahlen mindestens eines VinylPolymers zusammen mit mindestens einem hydraulisch, latent-hydraulisch oder puzzolanisch abbindenden Stoff oder dessen mineralischen Vorprodukt beschrieben. Dabei beträgt die Gesamtmenge an Vinyl-Polymer 0,6 bis 10 Gew.-%, bezogen auf das Gesamtgewicht des hydraulisch, latent-hydraulisch oder puzzolanisch abbindenden bauchemischen Produkts, und das Vinyl-Polymer ist ausgewählt aus den Polymeren basierend auf Vinylacetat, Acrylsäure und deren Derivaten, Styrol, Ethylen, Vinylversatat, Vinyllaurat, Vinylchlorid, oder Mischungen von diesen, wobei das Homopolymer des Styrols, sowie Polymere, die imidierte Acrylateinheiten enthalten, ausgenommen sind.

Die Veröffentlichung US 7,968,642 B2 beschreibt ein redispergierbares Polymer, das als eine Redispersionshilfe statt Polyvinylalkohol ein protektives Kolloidsystem beinhaltet, das von 30 Gew.-% bis 100 Gew.-% eines niedrigmolekularen Polyacrylamid-Kolloids mit einem niedrigen Molekulargewicht enthält, welches in einer 20%igen Lösung in Wasser eine Viskosität im Bereich von 200 bis 800 Centipoise hat. Das redispergierbare Polymer kann ein Polymer enthalten, das durch die Emulsionspolymerisation eines Vinyl(meth)acryl-basierten Polymeren gebildet wurde. Das Polymer kann zudem als Pulver oder als Flüssigkeit vorliegen.

Aufgabe der vorliegenden Erfindung ist vor diesem Hintergrund die Bereitstellung eines pulverförmigen Zusatzstoffs für Beton, der bereits in dieser Pulverform einem für den Beton verwendeten Zement zugemischt werden kann und zusätzlich eine hohe Tieftemperaturflexibilität und Wasserfestigkeit bewirkt. Dabei sollte der pulverförmige Zusatzstoff bei seiner Verwendung vorzugsweise über ein verbessertes Absetzverhalten, d.h. eine längere Absetzzeit (> 12 Stunden), verfügen, wenn er mit Wasser gemischt wird, bevor diese Mischung zum Anrühren von Zement / Beton verwendet wird. Zudem soll dieser Zusatzstoff vorzugsweise auch zur Herstellung von mit hydraulischen Bindemitteln verfestigten oder stabilisierten Schichten zur Verwendung im Wegebau geeignet sein, wo er vorzugsweise eine Erhöhung der Ermüdungsfestigkeit der mit den hydraulischen Bindemitteln gebundenen Schichten bewirkt. Aufgabe der Erfindung ist außerdem die Bereitstellung eines Verfahrens zur Herstellung dieses Betons.

Die Lösung dieser Aufgabe wird nach dieser Erfindung erreicht durch einen pulverförmigen, polymermodifizierten Zusatzstoff für einen Beton sowie ein Verfahren zur Herstellung dieses Betons mit den Merkmalen der unabhängigen Patentansprüche. Bevorzugte Ausführungsformen des erfindungsgemäßen Zusatzstoffes sind in entsprechenden abhängigen Patentansprüchen aufgeführt. Bevorzugte Ausführungsformen der erfindungsgemäßen Zusatzstoffe entsprechen bevorzugten Ausführungsformen des erfindungsgemäßen Verfahrens und umgekehrt, selbst wenn dies hierin nicht explizit festgestellt wird.

Gegenstand der Erfindung ist somit ein pulverförmiger, polymermodifizierter Zusatzstoff für Beton, der als Komponenten
(a) 55 bis 99,5 Gew.-%, vorzugsweise 60 bis 90 Gew.-%, mehr bevorzugt 65 bis 75 Gew.-% eines Kern-Schale-Polyacrylats mit einer Glasübergangstemperatur Tgk des Kerns ≤ -10 °C, vorzugsweise einer Tgk ≤ - 20 °C, und mehr bevorzugt einer Tgk ≤ -30 °C, sowie einer Glasübergangstemperatur Tgs der Schale > 0 °C;
(b) 0,5 bis 5 Gew.-%, vorzugsweise 1 bis 3 Gew.-%, mehr bevorzugt 1,5 bis 2,5 Gew.-% einer pyrogenen oder kolloidalen Kieselsäure;
(c) 0 bis 8 Gew.-%, vorzugsweise 3 bis 7 Gew.-%, mehr bevorzugt 4 bis 6 Gew.-% eines modifizierten Polycarboxylatethers; und
(d) 0 bis 35 Gew.-%, vorzugsweise 5 bis 25 Gew.-%, mehr bevorzugt 18 bis 22 Gew.-%, einer Kreide mit einem d50-Wert ≤ 8 µm, vorzugsweise mit einem d50-Wert ≤ 5 µm und ganz bevorzugt mit einem d50-Wert ≤ 4 µm enthält;
wobei sich Gew.-% jeweils auf die Summe der Komponenten des Zusatzstoffes, d.h. hier (a) bis (d), bezieht.

Bei einem erfindungsgemäß bevorzugten Zusatzstoff ist der Beton ein Magerbeton mit einem Zementanteil von weniger als 12 Gew.-%, bezogen auf den Beton.

Überdies ist es erfindungsgemäß bevorzugt, dass der Zusatzstoff ein Zusatzstoff für Beton zur Bodenverfestigung ist.

Der Beton ist erfindungsmäßig nicht eingeschränkt. Aber in einer bevorzugten Ausführungsform des Zusatzstoffes ist der Beton ein Magerbeton mit einem Zementanteil von weniger als 12 Gew.-%, bezogen auf den Beton. Ein Magerbeton enthält neben Zement im Allgemeinen alle Bestandteile, die auch in Betonen mit höheren Zementanteilen üblich sind.

Der erfindungsgemäß eingesetzte Zement ist im Allgemeinen Portlandzement.

Vorzugsweise ist der erfindungsgemäße Zusatzstoff ein Zusatzstoff für Beton zur Bodenverfestigung.

Wenn ein Kern-Schale-Polyacrylat (a) mit einer Glasübergangstemperatur Tgk ≤ -20 °C verwendet wird, wird vorzugsweise ein Polyacrylat verwendet, bei welchem der Kern mindestens 50 % Butyl- und/oder Ethylhexylacrylatmonomere enthält.

Der erfindungsgemäße Zusatzstoff kann insbesondere wegen der Tgs der Schale > 0°C mittels Sprühtrocknung ohne Verklumpung getrocknet werden.

Das Kern-Schale-Polyacrylat (a) kann Comonomere enthalten. Beispiele für geeignete Comonomere sind Ethylen, Propylen, Butylen, Isopren, Acrylonitril, Acrylsäure, Methacrylsäure, verschiedene Acrylsäurealkylester und/oder Methacrylsäurealkylester, Vinylester, Vinylchlorid und Vinyl- oder Methacrylsilane.

Die Werte für die Glasübergangstemperaturen Tgs und Tgk des Kern-Schale-Polyacrylats (a) beziehen sich auf eine Messung mit Differential Scanning Calorimetry (DSC) gemäß DIN EN ISO 11357-1.

Ein erfindungsgemäß geeignetes Kern-Schale-Polyacrylat (a) ist unter der Bezeichnung Dehydro™ 8999 bei der Firma Acquos erhältlich.

Neben dem Kern-Schale-Polyacrylat (a) und dem modifizierten Polycarboxylatether (c) kann der erfindungsgemäße Zusatzstoff noch weitere wasserlösliche oder redispergierbare Polymere enthalten. Beispiele für weitere Polymere sind Polyurethane, Polyvinylalkohol, Stärke- / Zellulosederivate, Polyvinylpyrrolidon oder Ethylenvinylacetatcopolymere, die dann ebenfalls in Pulverform eingesetzt werden. Der Zusatzstoff kann beispielsweise hydrophile Polymere wie Cellulosederivate oder Stärkederivate (Methylcellulose, Methylhydroxypropylcellulose, Methylhydroxyethylcellulose oder Hydroxypropylstärke) enthalten.

Sofern diese zusätzlich im erfindungsgemäßen Zusatzstoff enthalten sind, beschränkt sich ihr Gehalt im Allgemeinen auf bis zu 10 Gew.-%, bevorzugt auf bis zu 5 Gew.%, bezogen auf die Gesamtmasse an Polymeren und Copolymeren im Zusatzstoff.

Der erfindungsgemäße Zusatzstoff enthält als Komponente (b) eine pyrogene oder kolloidale Kieselsäure, vorzugsweise eine pyrogene Kieselsäure. Die Kieselsäure (b) hat vorzugsweise eine spezifische Oberfläche im Bereich von 50 bis 100 m²/g, mehr bevorzugt im Bereich von 100 bis 300 m²/g. Eine geeignete Kieselsäure ist beispielsweise Aerosil® 200 der Fa. Evonik.

Als optionale Komponente (c) enthält der Zusatzstoff einen modifizierten Polycarboxylatether. Ein besonders geeigneter modifizierter Polycarboxylatether wird unter der Bezeichnung Melflux® 1641 F, welches ein rieselfähiges, sprühgetrocknetes Pulver auf Basis eines modifizierten Polycarboxylatethers ist, von der BASF Construction Polymers GmbH vertrieben.

Der d50-Wert der optional im Zusatzstoff eingesetzten Kreide (d) ist als mittlere Partikelgröße gemäß DIN 13320 definiert. Der d50-Wert gibt dabei die mittlere Partikelgröße an. D50 bedeutet, dass 50% der Partikel kleiner sind als der angegebene Wert. Die Bestimmung der mittleren Partikelgröße erfolgt im Allgemeinen mittels Laserdiffraktometrie.

In einer besonders bevorzugten Ausführungsform enthält der erfindungsgemäße Zusatzstoff als Komponente (e) ein Silikon-basiertes Hydrophobierungsmittel in einer Menge von 0,1 bis 5 Gew.-%, vorzugsweise in einer Menge von 2 bis 4 Gew.-% und noch mehr bevorzugt in einer Menge von 2,5 bis 3,5 Gew.-%, bezogen auf die Summe der Komponenten (a) bis (e). Ein erfindungsgemäß besonders gut geeignetes hydrophobes Silikon wird unter der Bezeichnung Silres® Powder D von der Firma WACKER vertrieben.

Die Komponenten (a) und (b) sowie die optionalen Komponenten (c) bis (e) werden im Allgemeinen in Form ihrer Pulver eingesetzt, so dass der erfindungsgemäße Zusatzstoff durch Mischen der im Allgemeinen in Pulverform vorliegenden Komponenten (a) und (b) bzw. optional zusätzlich (c), (d) und/oder (e) erhalten werden kann.

Die Erfindung betrifft außerdem ein Verfahren zur Herstellung eines Betons, insbesondere eines Magerbetons, enthaltend einen Schritt der Mischung eines Zements mit einem der vorgenannten Zusatzstoffe und mit einer Gesteinskörnung.

Die Gesteinskörnung für Beton und deren Eigenschaften werden nach der EN 12620 definiert und gemessen. Im Standardnachschlagewerk "Zement Taschenbuch 2000, ISBN 3-7640-0399-5" werden diese ausführlich erläutert.

In einer bevorzugten Ausführungsform ist das erfindungsgemäße Verfahren ein Verfahren zur Herstellung eines Straßen- oder Wegaufbaus, enthaltend einen Schritt der Herstellung einer hydraulisch gebundenen Schicht, in dem ein Bodenmaterial mit dem Zement und dem oben beschriebenen Zusatzstoff vermischt wird und eine daraus erhaltene Untergrundschicht kompaktiert wird.

Das Bodenmaterial besteht aus vorhandenen Bodenbestandteilen und/oder Zuschlägen, die für eine hydraulisch gebundene Trägerschicht nötig sind.

Ein Verfahren zur Herstellung eines Straßen- oder Wegaufbaus ist bevorzugt, bei dem die hydraulisch gebundene Schicht Zement in einer Menge von 0,3 bis 10 Gew.-%, vorzugsweise in einer Menge von 2 bis 5 Gew.-%, bezogen auf das Gewicht der Schicht enthält.

Zudem ist erfindungsgemäß ein Verfahren bevorzugt, bei dem die hydraulisch gebundene Schicht den Zusatzstoff in einer Menge von 0,05 bis 0,5 Gew.-%, bezogen auf das Gewicht der Schicht, enthält.

Erfindungsgemäß ist zudem ein Verfahren bevorzugt, bei dem auf der hydraulisch gebundenen Schicht eine Deckschicht aufgebracht wird, vorzugsweise eine Bitumen oder Beton enthaltende Deckschicht. Im Standardnachschlagewerk "Straßenbau und Straßenerhaltung, ISBN 3 503 06094 4" ist diese Arbeitsweise ausführlich dokumentiert.

Ein Straßenkörper im Straßen- und Wegebau enthält im Allgemeinen einen unterteilten Oberbau, der eine Deckschicht, nämlich die Fahrbahndecke, und ggf. eine sog. Binder-schicht trägt. Der unterteilte Oberbau besteht im Allgemeinen aus Tragschichten, die wiederum in ungebundene Tragschichten (Frostschutzschicht, Kies- und Schotterschicht, Bodenverbesserungsschicht) und gebundene Tragschichten unterteilt sind.

Bei der Verwendung des erfindungsgemäßen Zusatzstoffes im erfindungsgemäßen Verfahren können beispielsweise in einer Mischanlage ein Bodenmaterial, Zuschlagstoffe, Recycling-Material, Zement und der erfindungsgemäße Zusatzstoff in einer stationären oder mobilen Mischanlage vorab mit optimiertem Wassergehalt gemischt werden. Diese Mischung kann anschließend auf eine Baustelle gebracht werden, wo dann diese beispielsweise als Tragschicht für eine Bodenschicht ausgebracht werden kann. Im Allgemeinen wird dann mit einem Grader ein Planum hergestellt und anschließend eine Verdichtung der homogenisierten und verbesserten Bodenschicht mittels vibrierender Walzen durchgeführt. In weiteren Arbeitsgängen können dann Deckschichten aus Split, Asphalt und/oder Beton aufgebracht werden. Beispielsweise kann eine Deckschicht aus Split und Bitumenemulsion hergestellt werden, wie im Nachschlagewerk Asphalt im Straßenbau, ISBN 978-3-7812-1782-9 ausführlich beschrieben wird.

Allerdings hat der erfindungsgemäße Zusatzstoff den großen Vorteil, dass er bereits einem hergestellten Zement zugemischt werden kann, beispielsweise in einem Zementwerk.

Zur Anwendung kann hierbei vor Ort an einer Baustelle die Verarbeitung des erfindungsgemäßen Zusatzstoffes erfolgen. Dabei kann beispielsweise eine festgelegte Zementmenge auf den anstehenden Boden ausgebracht werden und der Boden bis zu beispielsweise 50 cm mit einer Bodenfräse gefräst werden. Dabei wird der Zement mit optimierter Wassermenge eingearbeitet.

Die Erfindung hat zahlreiche Vorteile. Es können Kosten- und Qualitätsvorteile erzielt werden, wobei die Bauzeit sowie der CO₂-Ausstoß reduziert werden können. Letzteres insbesondere auch durch eine kürzere Einsatzzeit von Baumaschinen. Es ist möglich, eine verbesserte Biegefestigkeit unabhängig von der Menge des im Allgemeinen verwendeten Portlandzements zu erreichen. Schichtdicken der Beton-oder Asphaltdecken können eventuell reduziert werden. Die Wasserempfindlichkeit und somit die Frostempfindlichkeit verringern sich. Die Lebensdauern der Tragschichten bzw. der damit erstellten Straßen- oder Wegbeläge verlängern sich und ebenso die Wartungsperioden von mit recycelten Materialien gebauten Straßen.

Der erfindungsgemäße Zusatzstoff katalysiert nicht nur die Zementreaktion, sondern verhindert auch Auswaschungen von Schadstoffen wie z.B. Steinkohleteer. Er erhöht die Biegefestigkeit und somit die Elastizität der diesen Zusatzstoff enthaltenden Schichten. Der Straßenaufbau und die Schichtdicke können ohne Qualitätseinbußen vereinfacht werden. Es werden Zementstabilisierungen mit allen Arten vorhandener Böden sowie mit recycelten Zuschlagstoffen, Bitumen, organischen Komponenten und Schadstoffen ermöglicht. Es können daher hohe Einsparungen bei Entsorgungs- , Transport- und Materialkosten realisiert werden. Die zusätzliche Verbesserung der Elastizität und der Frostbeständigkeit führt zu deutlich verminderter Rissbildung in der stabilisierten Schicht über die gesamte Lebensdauer. Kurvenreiche Straßen, insbesondere kurvenreiche Bergstraßen, sind nämlich extremen Scherkräften ausgesetzt, so dass es im Allgemeinen zu einem schnellen Abrieb kommt. Zudem können die Witterungsverhältnisse und deren Änderungen die Untergründe stark belasten, insbesondere durch starke Regenfälle und Stürme. Es kann schließlich zu erhöhter Rissbildung in der Tragschicht kommen, so dass die Frostbeständigkeit und Elastizität der Tragschicht wichtig sind. Dadurch vermindert sich die Rissbildung und die Tragschicht nimmt zusätzlich Zugkräfte auf. Dies führt zu deutlich längerer Haltbarkeit und besserer Qualität. Darüber hinaus kann ein recycelter Straßenbelag sicher in die Tragschicht einbezogen werden.

Es wird zudem ein Zusatzstoff bereitgestellt, bei dessen Einsatz hohe Biegefestigkeitswerte der Bodenschicht erreicht werden können. Es wird ein absolut umweltverträgliches Produkt erhalten, das sich sehr rasch mit dem zulaufenden Wasser auf einer Baustelle vermischen kann, wenn der Zusatzstoff vor der Vermischung mit Zement zuerst dem nötigen Anmachwasser zugegeben wird. Überdies kann auf Salz-Zusätze und weitere hydrophile Polymerbestandteile verzichtet werden. Belastungssimulationen haben überdies eine verlängerte Lebensdauer der Straße ergeben.

Bei der Straßenherstellung können eine besonders elastische hydraulisch gebundene Tragschicht (HGT) und eine Asphaltdeckschicht kombiniert werden. Durch den erfindungsgemäßen Zusatzstoff kann dabei die Elastizität der HGT erhöht und dadurch die Rissbildung erheblich verringert werden. Damit ist auch eine Reduzierung der Stärke einer Asphaltdeckschicht möglich, z.B. von 14 cm auf 8 cm. Die Druckfestigkeit erhöht sich auch ohne Einsatz von Entspannungswalzen. Es wird eine kürzere Bauzeit und eine dünnere Asphaltdecke ermöglicht, wobei erreicht werden kann, dass weder Rissbildungen noch Setzungen auftreten. Es ist in einigen Fällen kein Transport und Einsatz von Primärrohstoffen (Kies, Splitt) für die HGT erforderlich, so dass durch den verringerten Einsatz von Baufahrzeugen auch der CO₂-Ausstoß verringert werden kann. Es kann eine Stabilisierung von Wegen, z.B. von Waldwegen im alpinen Raum bei hoher Frost-Tau-Belastung erreicht werden. Eine Stabilisierung wird dabei schon mit Zement und Zusatzstoff, ohne eine Tragschicht, erreicht.

## Patentansprüche

1. Pulverförmiger polymermodifizierter Zusatzstoff für Beton,
**dadurch gekennzeichnet, dass** er als Komponenten
(a) 55 bis 99,5 Gew.-% eines Kern-Schale-Polyacrylats mit einer Glasübergangstemperatur Tgk des Kerns ≤ -10 °C, sowie einer Glasübergangstemperatur Tgs der Schale > 0 °C;
(b) 0,5 bis 5 Gew.-% einer pyrogenen oder kolloidalen Kieselsäure;
(c) 0 bis 8 Gew.-% eines modifizierten Polycarboxylatethers; und
(d) 0 bis 35 Gew.-% einer Kreide mit einem d50-Wert ≤ 8 µm
enthält, wobei sich Gew.-% jeweils auf die Summe der Komponenten bezieht.

2. Zusatzstoff nach Anspruch 1, **dadurch gekennzeichnet, dass** der Beton ein Magerbeton mit einem Zementanteil von weniger als 12 Gew.-%, bezogen auf den Beton, ist.

3. Zusatzstoff nach Anspruch 1 oder 2, **dadurch gekennzeichnet, dass** er ein Zusatzstoff für Beton zur Bodenverfestigung ist.

4. Zusatzstoff nach einem der Ansprüche 1 bis 3, **dadurch gekennzeichnet, dass** er 60 bis 90 Gew.-% des Kern-Schale-Polyacrylats (a); 1 bis 3 Gew.-% der Kieselsäure (b), 3 bis 7 Gew.-% des Polycarboxylatethers (c) und 5 bis 25 Gew.-% der Kreide (d), jeweils bezogen auf die Summe der Komponenten, enthält.

5. Zusatzstoff nach Anspruch 4, **dadurch gekennzeichnet, dass** er 65 bis 75 Gew.-% des Kern-Schale-Polyacrylats (a); 1,5 bis 2,5 Gew.-% der Kieselsäure (b), 4 bis 6 Gew.-% des Polycarboxylatethers (c) und 18 bis 22 Gew.-% der Kreide (d), jeweils bezogen auf die Summe der Komponenten, enthält.

6. Zusatzstoff nach einem der Ansprüche 1 bis 5, **dadurch gekennzeichnet, dass** er zusätzlich als Komponente (e) ein Silikon-basiertes Hydrophobierungsmittel in einer Menge von 0,1 bis 5 Gew.-%, bezogen auf die Summe der Komponenten (a) bis (e) enthält.

7. Verfahren zur Herstellung eines Betons, insbesondere eines Magerbetons, enthaltend einen Schritt der Mischung eines Zements mit einem Zusatzstoff nach einem der Ansprüche 1 bis 6 und mit einer Gesteinskörnung.

8. Verfahren nach Anspruch 7, **dadurch gekennzeichnet, dass** es ein Verfahren zur Herstellung eines Straßen- oder Wegaufbaus ist, enthaltend einen Schritt der Herstellung einer hydraulisch gebundenen Schicht, in dem ein Bodenmaterial mit dem Zement und dem Zusatzstoff nach einem der Ansprüche 1 bis 6 vermischt wird und eine daraus erhaltene Untergrundschicht kompaktiert wird.

9. Verfahren nach Anspruch 8, **dadurch gekennzeichnet, dass** die hydraulisch gebundene Schicht Zement in einer Menge von 0,3 bis 10 Gew.-%, vorzugsweise in einer Menge von 2 bis 5 Gew.-%, bezogen auf das Gewicht der Schicht, enthält.

10. Verfahren nach einem der Ansprüche 8 oder 9, **dadurch gekennzeichnet, dass** die hydraulisch gebundene Schicht den Zusatzstoff in einer Menge von 0,05 bis 0,5 Gew.-%, bezogen auf das Gewicht der Schicht, enthält.

11. Verfahren nach einem der Ansprüche 8 bis 10, **dadurch gekennzeichnet, dass** auf der hydraulisch gebundenen Schicht eine Deckschicht aufgebracht wird, vorzugsweise eine Bitumen oder Beton enthaltende Deckschicht.

## Geänderte Patentansprüche

### Geänderte Patentansprüche gemäss Regel 137(2) EPÜ.

1. Pulverförmiger polymermodifizierter Zusatzstoff für Beton,
**dadurch gekennzeichnet, dass** er als Komponenten
(a) 55 bis 99,5 Gew.-% eines Kern-Schale-Polyacrylats mit einer Glasübergangstemperatur Tgk des Kerns ≤ -10 °C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g;
(c) 0 bis 8 Gew.-% eines modifizierten Polycarboxylatethers; und
(d) 5 bis 35 Gew.-% einer Kreide mit einem d50-Wert ≤ 8 µm enthält, wobei sich Gew.-% jeweils auf die Summe der Komponenten bezieht.

2. Zusatzstoff nach Anspruch 1, **dadurch gekennzeichnet, dass** er
60 bis 90 Gew.-% des Kern-Schale-Polyacrylats (a); 1 bis 3 Gew.-% der Kieselsäure (b), 3 bis 7 Gew.-% des Polycarboxylatethers (c) und 5 bis 25 Gew.-% der Kreide (d), jeweils bezogen auf die Summe der Komponenten, enthält.

3. Zusatzstoff nach Anspruch 2, **dadurch gekennzeichnet, dass** er 65 bis 75 Gew.-% des Kern-Schale-Polyacrylats (a); 1,5 bis 2,5 Gew.-% der Kieselsäure (b), 4 bis 6 Gew.-% des Polycarboxylatethers (c) und 18 bis 22 Gew.-% der Kreide (d), jeweils bezogen auf die Summe der Komponenten, enthält.

4. Zusatzstoff nach einem der Ansprüche 1 bis 3, **dadurch gekennzeichnet, dass** er zusätzlich als Komponente (e) ein Silikon-basiertes Hydrophobierungsmittel in einer Menge von 0,1 bis 5 Gew.-%, bezogen auf die Summe der Komponenten (a) bis (e) enthält.

5. Verwendung eines pulverförmigen polymermodifizierten Zusatzstoffes, der als Komponenten
(a) 55 bis 99,5 Gew.-% eines Kern-Schale-Polyacrylats mit einer Glasübergangstemperatur Tgk des Kerns ≤ -10 °C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g;
(c) 0 bis 8 Gew.-% eines modifizierten Polycarboxylatethers; und
(d) 5 bis 35 Gew.-% einer Kreide mit einem d50-Wert ≤ 8 µm enthält, wobei sich Gew.-% jeweils auf die Summe der Komponenten bezieht, als Zusatzstoff für einen Magerbeton mit einem Zementanteil von weniger als 12 Gew.-%, bezogen auf den Beton.

6. Verwendung eines pulverförmigen polymermodifizierten Zusatzstoffes, der als Komponenten
(a) 55 bis 99,5 Gew.-% eines Kern-Schale-Polyacrylats mit einer Glasübergangstemperatur Tgk des Kerns ≤ -10 °C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g;
(c) 0 bis 8 Gew.-% eines modifizierten Polycarboxylatethers; und
(d) 5 bis 35 Gew.-% einer Kreide mit einem d50-Wert ≤ 8 µm
enthält, wobei sich Gew.-% jeweils auf die Summe der Komponenten bezieht, als Zusatzstoff für einen Magerbeton mit einem Zementanteil von weniger als 12 Gew.-%, bezogen auf den Beton, als Zusatzstoff für einen Beton zur Bodenverfestigung.

7. Verfahren zur Herstellung eines Magerbetons, enthaltend einen Schritt der Mischung eines Zements mit einem Zusatzstoff nach einem der Ansprüche 1 bis 4 und mit einer Gesteinskörnung, wobei der Zement in einer Menge zugesetzt wird, dass der Zementanteil weniger als 12 Gew.-%, bezogen auf den Beton, ist.

8. Verwendung eines Magerbetons, der durch einen Schritt der Mischung eines Zements mit einem Zusatzstoff nach einem der Ansprüche 1 bis 4 und mit einer Gesteinskörnung erhalten wurde, wobei der Zement in einer Menge zugesetzt wurde, so dass der Zementanteil weniger als 12 Gew.-%, bezogen auf den Beton, ist, zur Herstellung eines Straßen- oder Wegaufbaus ist, enthaltend einen Schritt der Herstellung einer hydraulisch gebundenen Schicht, in dem ein Bodenmaterial mit dem Zement und dem Zusatzstoff nach einem der Ansprüche 1 bis 4 vermischt wird und eine daraus erhaltene Untergrundschicht kompaktiert wird.

9. Verwendung nach Anspruch 8, **dadurch gekennzeichnet, dass** die hydraulisch gebundene Schicht Zement in einer Menge von 0,3 bis 10 Gew.-%, vorzugsweise in einer Menge von 2 bis 5 Gew.-%, bezogen auf das Gewicht der Schicht, enthält.

10. Verwendung nach einem der Ansprüche 8 oder 9, **dadurch gekennzeichnet, dass** die hydraulisch gebundene Schicht den Zusatzstoff in einer Menge von 0,05 bis 0,5 Gew.-%, bezogen auf das Gewicht der Schicht, enthält.

11. Verwendung nach einem der Ansprüche 8 bis 10, **dadurch gekennzeichnet, dass** auf der hydraulisch gebundenen Schicht eine Deckschicht aufgebracht wird, vorzugsweise eine Bitumen oder Beton enthaltende Deckschicht.
